# EUROPEAN PATENT APPLICATION

(11) **EP 2 363 579 A1**
(43) Date of publication of application: **07.09.2011**
(21) Application number: 10154520.0
(22) Date of filing: 24.02.2010
(51) Int. Cl.: F01L 1/344, F16K 27/02, F16K 31/06, F15B 13/044

(54) **Oil flow control valve with two check valves**

(71) Applicant: Delphi Technologies, Inc., Troy, MI 48007 (US)
(72) Inventor: Berndorfer, Axel H., 54453 Nittel (DE)
(74) Representative: Robert, Vincent

(57) **Abstract**

Oil flow control valve for a cam phaser, comprising a tubular housing extending along an axis and provided with an inlet, a first control port and a second control port, a spool slidably mounted along the axis inside the tubular housing and settable relative to it in a first position or in a second position, the spool being provided with fluid passages, so an incoming flow is being directed toward the first control port when in the first position, and toward the second control port when in the second position.

The spool is further provided with a first check valve opening the fluid passages to the incoming flow when in the first position and with a second check valve opening the fluid passages to the incoming flow when in the second position.

## Description

### TECHNICAL FIELD

The present invention generally relates to an oil flow control valve for a cam phaser.

### BACKGROUND OF THE INVENTION

Cam phasers are used to control the angular relationship of the pulley/sprocket to the camshaft of an engine. A variable cam phaser (VCP) allows changing the phase relationship while the engine is running. Typically, a cam phaser is used to shift the intake cam on a dual overhead cam engine in order to broaden the torque curve of the engine, to increase peak power at high rpm, and to improve the idle quality. Also, the exhaust cam can be shifted by a cam phaser in order to provide internal charge diluents control, which can significantly reduce HC and NOx emissions, or to improve fuel economy.

Cam phasers are controlled by hydraulic systems, which use pressurized lubrication oil from the engine in order to change the relative position between camshaft and crankshaft, thus altering the valve timing. The advance or retard position of the camshaft is commanded via an oil flow control valve, in the following referred OCV. The OCV controls the oil flow to different ports entering a cam phaser, thus controlling the angular position of the camshaft relative to pulley or sprocket. However, the efforts in the valve train pressurize the oil contained in the chambers of the cam phaser such that the oil pressure inside the cam phaser reaches peaks, which can be higher than the oil control supply pressure, i.e., the oil pressure supplied by the engine. This can lead to a certain amount of reverse oil flow across the OCV, diminishing the phase rate performance of the cam phasing system.

To avoid the reverse oil flow under the above mentioned circumstances, a check valve has been integrated in the oil passage of either the cylinder head or the crankcase. Such a check valve also ensures that the cam phaser does not empty out in cases when the oil pressure is reduced, for example when the engine is stopped. However, this approach adds significant cost to the cylinder head or engine block. Also, the implementation of the check valve can be difficult because of oil routing. Furthermore, the check valve should not be placed too far away from the cam phaser in order to be still effective.

Integrating a check valve in the housing of an OCV is know from EP 1447602 and, integrating a check valve in the spool is known from US5,291,860.

Unfortunately, these solutions propose OCV embodiments where the inlet for incoming pressurized oil flow is placed at one end of the OCV. Most of nowadays vehicles have engine block requiring a lateral inlet to the OCV.

Document EP 1767749 teaches a way to integrate a check valve in the spool and design the oil inlets/outlets on the side. Unfortunately, this solution leads to a relatively complex design for the spool.

### SUMMARY OF THE INVENTION

The object of the present invention is to propose an OCV easier to manufacture and which could be implemented easily with radial inlet/outlets.

The oil flow control valve, now called OCV, for a cam phaser, comprises a tubular housing extending along an axis and provided with an inlet, a first control port and a second control port, a spool slidably mounted along the axis inside the tubular housing and settable relative to it in a first position or in a second position. The spool is provided with fluid passages, so a incoming flow through the inlet is directed toward the first control port when in the first position, and toward the second control port when in the second position.

The spool is further provided with a first check valve opening the fluid passages to the incoming flow when in the first position and with a second check valve opening the fluid passages to the incoming flow when in the second position.

Advantageously, in either position of the spool, a reverse oil flow opposite to the incoming flow is stopped by a check valve.

The spool is provided with a radially extending inlet channel in fluid connection with the inlet of the housing, the inlet channel being in fluid connection with a first outlet channel and also with a second outlet channel. In the first position of the spool, the first outlet channel is in fluid connection with the first control port while the second outlet channel is sealed by the housing so the incoming flow is directed through the first control port. Reciprocally, in the second position of the spool, the first outlet channel is sealed by the housing and the second outlet channel is in fluid connection with the second control port so the incoming flow is directed through the second control port. The first check valve is located between the inlet channel and the first outlet channel and the second check valve is located between the inlet channel and the second outlet channel.

Each check valve comprises a closing member and a sealing surface operated in the fluid passage. The closing member closes the fluid passage by going in abutment against the sealing surface when a reverse flow opposite to the incoming flow pushes the closing member. The closure is ensured by matching geometries of the closing member with the sealing surface. The displacement of the closing member is done along the axis of the spool.

Each check valve may additionally comprise an elastic member cooperating with the closing member in order to bias it in abutment against the sealing surface. The closing member may be a ball or a disc. The elastic member is a spring.

Thanks to this design, the inlet is laterally positioned on the housing, axially placed between the first control port and the second control port.

### BRIEF DESCRIPTION OF THE DRAWINGS

Other advantages of the present invention will be readily appreciated as the same becomes better understood by reference to the following detailed description when considered in connection with the accompanying figures wherein:
Figure 1 is a schematic view showing the hydraulic circuit of a cam phaser, the circuit including an OCV according to the present invention, the circuit being in a first configuration PP 1.
Figure 2 is a view similar to Figure 1 showing the hydraulic circuit of the cam phaser, the circuit being in a first configuration PP2.
Figure 3 is a cross-section view showing the OCV, as in Figure 1, in a first position PS1.
Figure 4 is a view similar to Figure 3, the OCV being, as in Figure 2, in a second position PS2.

### DESCRIPTION OF THE PREFERRED EMBODIMENT

Preferred embodiments of an OCV 20 for a cam phaser 12 in accordance with the invention will now be described.

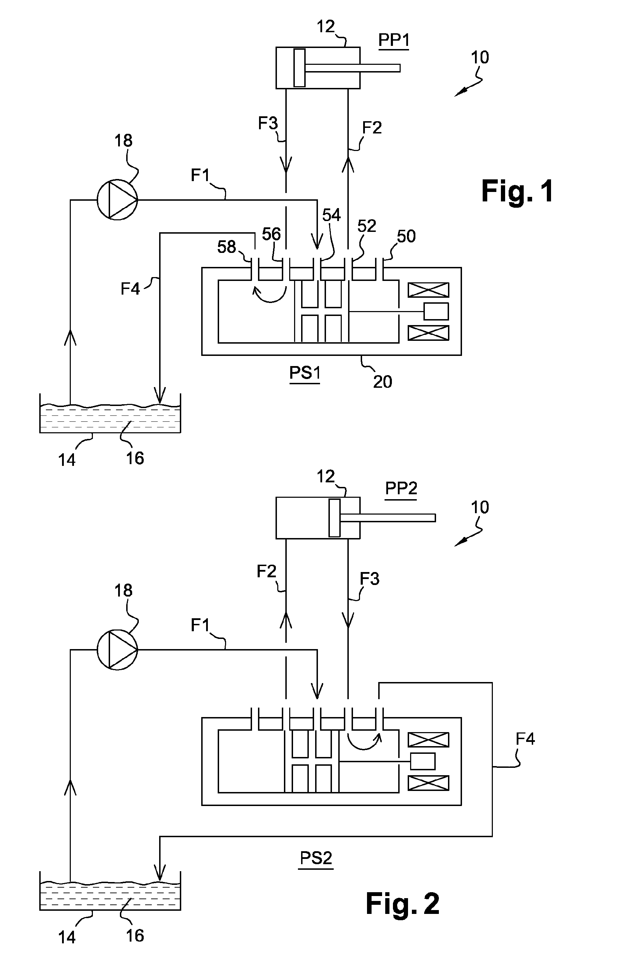

Figures 1 and 2 illustrate the operation of the cam phaser 12 controlled by an OCV 20. The OCV 20 is generally mounted in a bore in the engine cylinder head 10. The hydraulic circuit comprises an oil retainer 14 filled with a hydraulic fluid 16, a hydraulic pump 18, the OCV 20 and the cam phaser 12. The fluid 16 is pumped out of the oil retainer 14 and sent pressurized by the pump 18 as a flow F1 to an inlet 54 of the OCV 20.

In Figure 1, the OCV 20 is set to be in a first position PS1 and the oil flow F1 entering through the inlet 54 is internally directed to a first control port 52 of the OCV 20, and is then conducted as a flow F2 to the cam phaser 12. Under the influence of the pressurized flow F2 the cam phaser 12 switches to a Phaser first position PP1. A non-pressurized return flow F3 exiting from the cam phaser 12 is directed to a second control port 56 of the OCV 20 and internally directed to a second vent 58 then the fluid 16 is returned as a flow F4 back to the oil retainer 14.

In Figure 2, the OCV 20 is set to be in a second position PS2 and the oil flow F1 entering through the inlet 54 is internally directed to a second control port 56 of the OCV 20, and the flow F2 is then conducted to the cam phaser 12. Under the influence of the flow F2 the cam phaser 12 switches in a Phaser second position PP2. The non-pressurized return flow F3 exiting from the cam phaser 12 is directed to a first control port 52 of the OCV 20 and internally directed to a first vent 50 then conducted, as flow F4, back to the oil retainer 14.

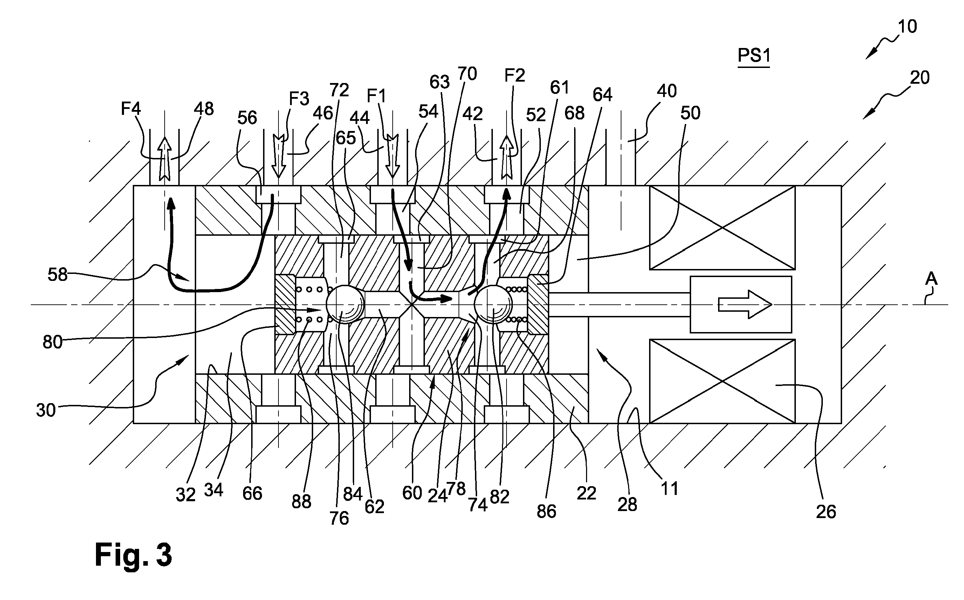

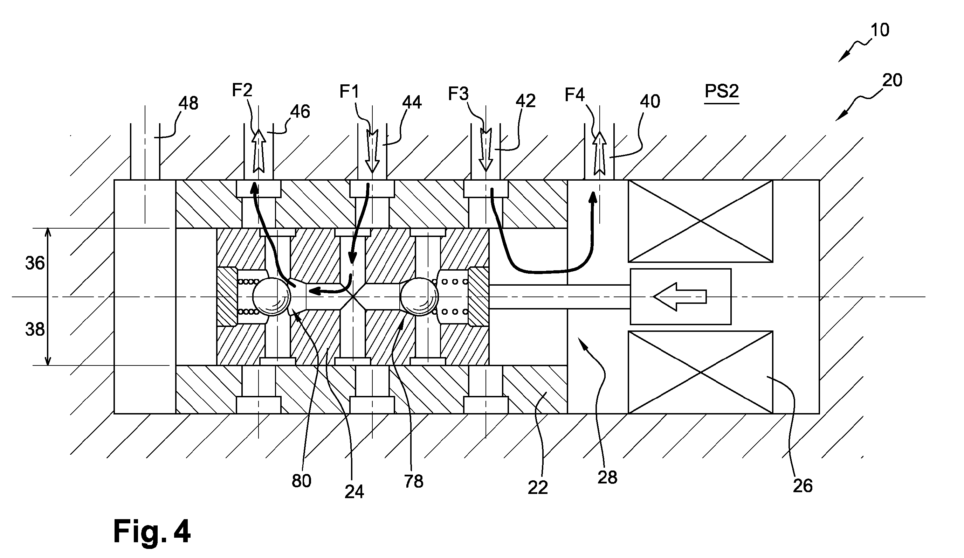

Figures 3 and 4 provide details on the OCV 20 internal embodiment.

The OCV 20 comprises a housing 22 mounted in a bore 11 in the engine cylinder head 10, a spool 24 reciprocally mounted in the housing 22, and a control unit 26 for controlling the position of the spool 24 in the housing 22.

The housing 22 is a tube extending along an axis A from a first end 28 to a second end 30. The housing 22 has an inner cylindrical wall 32 extending between the ends 28 and 30. The wall 32 defines an inner chamber 34 of the housing 22 which transversal cross section is circular.

The cylinder head 10 is provided with five oil channels 40, 42, 44, 46 and 48 open into the bore 11. The housing 22 is provided with a first vent 50 connected to the oil channel 40, with a first control port 52 connected to the oil channel 42, with an inlet 54 connected to the oil channel 44, with a second control port 56 connected to the oil channel 46 and with a second vent 58 connected with the oil channel 48.

The first vent 50, the first control port 52, the inlet 54, the second control port 56 and the second vent 58 are axially spaced from the first end 28 to the second end 30.

The directions followed by the oil flows F1, F2, F3 and F4 going through the OCV 20 and the channels are essentially controlled by the position of the spool 24. The position of the spool 24 relative to the housing 22 is set by the control unit 26, which preferably includes a solenoid actuator.

The spool 24 has the general form of a plain cylinder having an external surface 60 having an outer diameter 38 slidably adjusted to the inner diameter 36 of the housing 22. When positioned inside the housing 22, the spool 24 is coaxial to the housing 22 and is able to axially translate along axis A between a first position PS1, as in Figure 3, and a second position PS2, as in Figure 4.

The spool 24 is further provided with an axial central channel 62 in fluid connection with three radial channels being a first channel 68, an inlet channel 70 and a second channel 72 themselves opening respectively into three annular grooves 61, 63 and 65 axially distributed in the external surface 60 of the spool 24.

The first channel 68 and the central channel 62 perpendicularly interconnect at a first junction 74. The second channel 72 and the central channel 62 perpendicularly interconnect at a second junction 76. When approaching the first or the second junction 74, 76 the section of the central channel 62 increases providing a tapered geometry to the junctions 74, 76.

For manufacturing easiness of the central channel 62 and of the tapered junctions 74 and 76, the central channel 62 is a through hole along axis A open at both ends of the spool 24. Afterward, both openings are sealed by a first plug 64 in the vicinity of the first junction 74 and by a second plug 66 in the vicinity of the second junction 76.

In the first position PS1 of the spool 24, as represented in Figure 3, the inlet channel 70 is in fluid connection, via the annular groove 63, with the inlet 54 of the housing 22, the first channel 68 is in fluid connection, via the annular groove 61, with the first control port 52 and, the second channel 72 is sealed by the wall 32 of the housing 22.

In the second position PS2 of the spool 24, as represented in Figure 4, the inlet channel 70 remains in fluid connection, via the annular groove 63, with the inlet 54 of the housing 22, the first channel 68 is sealed by the wall 32 of the housing 22 and the second channel 72 is in fluid connection, via the annular groove 65, with the second control port 56.

In the spool 24, a first check valve 78 is placed at the first junction 74. It comprises a ball 82 placed in the tapered area of the first junction 74 and a spring 86 in axial compression between the ball 82 and the first plug 64. A second check valve 80 is placed at the second junction 76. It comprises a ball 84 placed in the tapered area of the second junction 76 and a spring 88 in axial compression between the ball 84 and the second plug 66. The springs 86, 88 are biasing the balls 82, 84 toward the tapered areas of the junctions 74, 76, thus closing the central channel 62.

In the first position PS 1 of the spool 24, as represented in Figure 3, the incoming pressurized oil flow F1 enters the spool 24 via the inlet 70 and is directed toward the first check valve 78. The pressured oil flow pushes the ball 82 and easily opens the first junction 74 as the compression force of the spring 86 is minimal and just sufficient to maintain the ball 82 in the tapered area in absence of pressurized oil flow. The first junction 74 is open enabling the flow F2 to be directed out through the first control port 52 toward the cam phaser 12. The non-pressurized oil flow F3, returning from the cam phaser 12, enters the OCV 20 via the second control port 56 and the oil flow F4 is directed out to the second vent 58 back to the oil retainer 14.

A reverse flow F5 (not represented) can occur when an effort in the valve train pressurizes the oil contained in the chambers of the cam phaser 12 such that the oil pressure inside the cam phaser 12 reaches peaks higher than the pressure of the flow F2. Inside the spool 24, the reverse flow F5 pushes the ball 82 in the tapered area of the first junction 74 sealing the central channel 62, thus advantageously stopping the reverse flow F5.

In the second position PS2 of the spool 24, as represented in Figure 4, the incoming pressurized oil flow F1 enters the spool 24 via the inlet 70 and is directed toward the second check valve 80. The pressured oil flow pushes the ball 84 and opens the second junction 76 as the compression force of the spring 88 is minimal and just sufficient to maintain the ball 84 in the tapered area in absence of pressurized oil flow. The second junction 76 is open enabling the flow F2 through the second control port 56 toward the cam phaser 12. The non-pressurized return oil flow F3 from the cam phaser 12 enters the OCV 20 via the first control port 52 and the oil flow F4 is directed out to the first vent 50 back to the oil retainer 14.

The reverse oil flow F5 (not represented) opposite to F2 entering the OCV 20 through the second control port 56 pushes the ball 84 in the tapered area of the second junction 76 sealing the central channel 62, thus advantageously stopping the reverse flow F5.

The essence of the invention resided in the ability to embed two check valves 78 and 80 in the spool 24 of the OCV 20. A non exhaustive list of alternative details based on this principal as previously described is now proposed.

The balls of the check valves can be replaced by discs or any other mean able to seal the central channel 62. In case of discs, the most appropriate geometries for the first and second junctions would be flat surfaces instead of the tapered geometry previously described. Whatever the sealing mean is, the junctions should have a matching geometry enabling the sealing of the central channel in case of a reverse flow.

The check valves can be designed spring less, the ball opening or closing the junction as per the oil pressure direction.

Furthermore, each annular groove 61, 63, 65, can be connected to the central channel 62 via a plurality of channels 68, 70 and 72 either extending radially or diametrally.

Additionally, the housing 22 can be provided with annular grooves operated in its outer surface. Each of the first control port 52, inlet 54 and second control port 56 would open in an annular groove.

These annular grooves operated in the spool 24 or in the wall 32 of the housing 22, either on the inside or the outside of the wall 32, advantageously ease the assembly in providing freedom of angular positioning of the spool 24 relative to the housing 22 or of the housing 22 relative to the engine block 10.

## Claims

1. Oil flow control valve (20) for a cam phaser (12), comprising a tubular housing (22) extending along an axis (A) and provided with an inlet (54), a first control port (52) and a second control port (56), a spool (24) slidably mounted along the axis (A) inside the tubular housing (22) and settable relative to it in a first position (PS1) or in a second position (PS2), the spool (24) being provided with fluid passages (62, 68, 70, 72) so a flow (F1) incoming through the inlet (54) is being directed toward the first control port (52) when in the first position (PS1), and toward the second control port (56) when in the second position (PS2), **characterized in that** the spool (24) is further provided with a first check valve (78) opening the fluid passages (70, 62, 68) to the flow (F1) when in the first position (PS1) and with a second check valve (80) opening the fluid passages (70, 62, 68) to the flow (F1) when in the second position (PS2).

2. Oil flow control valve (20) according to claim 1, the spool (24) being provided with a radially extending inlet channel (70) in fluid connection with the inlet (54) of the housing (22), the inlet channel (70) being in fluid connection with a first outlet channel (68) and also with a second outlet channel (72) so, in the first position (PS1) of the spool (24), the first outlet channel (68) is in fluid connection with the first control port (52) while the second outlet channel (72) is sealed by the housing (22) so the incoming flow (F1) is directed through the first control port (52), and reciprocally, in the second position (PS2) of the spool (24), the first outlet channel (68) is sealed by the housing (22) and the second outlet channel (72) is in fluid connection with the second control port (56) so the incoming flow (F1) is directed through the second control port (56), **characterized in that** the first check valve (78) is located between the inlet channel (70) and the first outlet channel (68) and the second check valve (80) is located between the inlet channel (70) and the second outlet channel (72).

3. Oil flow control valve (20) as set in any of the claim 1 or 2 **characterized in that** each check valve (78, 80) comprises a closing member (82, 84) and a sealing surface (74, 76) operated in the fluid passage (62, 68, 70, 72), the closing member (82, 84) closing the fluid passage (62, 68, 70, 72) by going in abutment against the sealing surface (74, 76) when a reverse flow (F5) opposite to the incoming flow (F1) pushes the closing member (82, 84), the closure being ensured by matching geometries of the closing member (82, 84) with the sealing surface (74, 76).

4. Oil flow control valve (20) as set in claim 3, **characterized in that** the displacement of the closing member (86, 88) is done along the axis (A) of the spool (24).

5. Oil flow control valve (20) as set in any of the claim 3 or 4 **characterized in that** each check valve (78, 80) additionally comprises an elastic member (86, 88) cooperating with the closing member (82, 84) in order to bias it in abutment against the sealing surface (74, 76).

6. Oil flow control valve (20) as set in any of the claims 3 to 5 **characterized in that** the closing member is a ball (82, 84).

7. Oil flow control valve (20) as set in any of the claims 3 to 5 **characterized in that** the closing member is a disc (82, 84).

8. Oil flow control valve (20) as set in any of the claims 4 to 7 **characterized in that** the elastic member is a spring (86, 88).

9. Oil flow control valve (20) as set in any of the preceding claim **characterized in that**, on the housing (22), the inlet (54) is axially placed between the first control port (52) and the second control port (56).
